# EUROPEAN PATENT SPECIFICATION

(11) **EP 2 017 495 B1**
(45) Date of publication and mention of the grant of the patent: **02.06.2010**
(21) Application number: 08075634.9
(22) Date of filing: 15.07.2008
(51) Int. Cl.: F16F 9/06, F16F 9/18

(54) **Wheel suspension with damping and separation piston in the same cylinder chamber**
Radaufhängung mit Dämpfungs- und Trennungskolben in derselben Zylinderkammer
Suspension de roue avec piston d'amortisseur et de séparation dans la même chambre de cylindre

(30) Priority: 20.07.2007 NL 1034169
(43) Date of publication of application: 21.01.2009
(73) Proprietor: WP Suspension B.V., 6581 KA Malden (NL)
(72) Inventor: Lindeman, Eric Alexander, 6642 AP Beuningen (NL)
(74) Representative: Riemens, Roelof Harm

(56) References cited:
- EP-A- 0 864 774
- DE-A1- 19 934 878
- JP-A- 60 067 209
- US-A- 4 807 860
- US-B1- 6 234 505
- US-B1- 6 311 962

## Description

The invention relates to a wheel suspension. The invention particularly relates to a front wheel suspension for a motorcycle of the type comprising a hydraulically damped telescopic fork with main spring.

In current technology, many variations are known of such telescopic forks for motorcycles. They often comprise an inner and an outer tube that can slide in and out of each other telescopically, and a main spring pushing both tubes away from each other in axial direction. A piston-cylinder system is mounted within the tubes which operates in a damping cylinder filled with damping fluid. A piston rod is connected to the damping piston and to one of both tubes. The damping cylinder is connected to the other of the two tubes. In order to be able to absorb volume changes as a result of the changing volume of piston rod entering the damping cylinder, it is necessary to provide compensation means. In so-called "open" damping systems, for instance, these compensation means are provided by an air reservoir within the tubes, which has an open connection to the ambient air on one side and to the damping fluid in the damping cylinder on the other side.

A disadvantage here, is that after a number of compression movements of the telescopic fork, an emulsion may be created of damping fluid with ambient air absorbed in it. This emulsion results in a less rigid telescopic fork and an inconsistent damping behaviour. This is very inconvenient for the motorcyclist and could even lead to dangerous situations.

To solve this problem, so called "closed" damping systems have been developed, where the damping fluid is separated from the ambient air by means of a pre-tensioned limiting element. This limiting element could be a flexible membrane under nitrogen pressure, but could also be created by a spring-tensioned separation piston which at one end lies against the damping fluid and at the other end lies against a compensation medium, e.g. air.

US 6,234,505 reveals such a front fork construction of the "closed" type. Here, the construction comprises an inner and outer tube in which a damping cylinder is mounted containing a damping piston that is able to slide up and down. For this purpose, the damping piston is mounted on a piston rod connected to the outer tube. On top of the damping cylinder, a guiding tube is provided along which a free separation piston can slide up and down. At one of its ends, the separation piston confines a ring-shaped reservoir filled with oil and air between the piston rod and the inner tube. At its other end, the separation piston confines the top side of a ring-shaped oil chamber between the damping cylinder and the inner tube. This oil chamber connects to the damping cylinder filled with damping fluid. The separation piston is pushed towards the oil chamber by means of a coil spring which is further supported by the outer tube. During compression of the front fork construction, the damping piston moves downward in the damping cylinder and oil will flow from one side of the damping piston to the other, via an outlet port in the damping piston that is provided with a control valve. An amount of oil equal to the extra volume of the piston rod part entering the damping cylinder is discharged to the oil chamber surrounding the damping cylinder. As a consequence, the free separation piston is moved upwards against the coil spring's force, in correspondence with the extra volume of oil that flowed into the oil chamber.

This known front fork construction has the disadvantage that it comprises many parts, is relatively heavy, difficult to assemble, and therefore expensive to produce. Another disadvantage is that oil can still leak from the reservoir above the separation piston to the oil chamber below it, and that a provision has to be made with a continuous opening in the guiding tube in order to overcome this problem.

The present invention aims to overcome the abovementioned disadvantages at least partly, or to offer a practical alternative. This invention particularly aims to offer a reliable "closed" type wheel suspension, which comprises few parts and is lightweight.

This aim is achieved through a wheel suspension according to claim 1. Here, the suspension comprises an inner tube and an outer tube that can slide in and out of each other telescopically, and which together confine a cylinder chamber. A piston rod extends within the cylinder chamber and is permanently fixed to the outer tube. At the free end of the piston rod, a damping piston is attached which operates in a part of the cylinder chamber that is filled with damping fluid. A separation piston is provided, which can be moved up and down in longitudinal direction in relation to the piston rod, and which at one side confines a part of the cylinder chamber that is filled with compensation medium. With its other side, the separation piston is lying against the part of the cylinder chamber that is filled with damping fluid. A main spring applies pressure to the outer tube on one side and to the separation piston on the other side. In this way, the damping piston and the separation piston are advantageously working in the same cylinder chamber and both, slideable in axial direction, operate onto the same cylindrical inner circumferential wall part of the inner tube.

Advantageously, the wheel suspension in accordance with the invention can comprise few parts while still offering a "closed" damping type, while no emulsification can occur in the part of the cylinder chamber that is filled with damping fluid. It even turned out to be possible to achieve a substantial reduction in parts, particularly the number of critical parts is very limited in comparison to known "closed" damping systems. Assembly of the construction can be fast and simple. The unsprung weight of the construction is substantially lower compared to known "closed" damping systems. This, for instance, is important when used as a front wheel suspension for motorcycles, as the front wheel suspension is part of the unsprung weight of the front wheel. Less weight leads to improvement of the road-holding ability, and thus to improvement of the driving characteristics. The quality in relation to price can be very advantageous. Another benefit, is that the damping fluid can remain completely separated from the compensation medium. As a result, both can be chosen separately, in such a way that they are optimal for the function they need to fulfil. During an incoming stroke, the separation piston will slide to compensate the introduction of additional piston rod volume in the part of the cylinder chamber that is filled with damping fluid. The sliding movement of the separation piston will also provide additional pressure build-up for the main spring.

The main spring in particular comprises a spring element (e.g. a coil spring), axially extending within the cylinder chamber, in the part of the cylinder chamber that is filled with compensation medium, and which will apply pressure onto the outer tube with its one end and will apply pressure onto the separation piston with its other end. Additionally, or as a variation, the main spring can also comprise a gas spring which preferably is created by means of a compressible gaseous part of the compensation medium that is trapped in the part concerned of the cylinder chamber.

In a preferred embodiment, the compensation medium comprises at least a part lubricant, particularly lubricant oil. This lubricant can then provide a good lubrication of the moving parts at the side concerned of the separation piston, such as the piston rod, the main spring and the separation piston itself. The damping fluid, e.g. damping oil, may now have advantageous optimum damping characteristics. These will usually be different characteristics than those of the previously mentioned lubricant. For instance, the lubricant could have a higher viscosity than the damping fluid. Also, the compensation medium could fully or partially consist of a gas, e.g. air that is directly or indirectly connected to the ambient air, in order to absorb the required changes in volume. Preferably, the gaseous part of the compensation medium is trapped in the part concerned of the cylinder chamber, and the compressibility of the gaseous part will make sure that the required volume changes can be absorbed. Here, the gaseous part, as stated above, can fully or partly perform the function of main spring.

In a special embodiment, the separation piston comprises a guiding part that operates onto the piston rod. The guiding part centers the piston rod in the cylinder chamber and provides adequate guidance as the suspension compresses and decompresses. The guidance part is preferably formed by a friction reducing bearing element coupled to the separation piston, e.g. a bearing bush. The bearing bush can be advantageously lubricated with a lubricant, if it is part of the compensation medium. For this purpose, there is a variation where the separation piston comprises a flow channel extending between the chamber filled with compensation fluid and the guiding part.

In another embodiment, the separation piston comprises a sealing part, e.g. a ring-shaped sealing element, lying against the piston rod in order to seal it. In this way the piston rod and the separation piston can move up and down in relation to each other, while at the same time the compensation medium and damping fluid cannot mix. The sealing part is preferably constructed in such a way that, under pressure of the compensation medium and/or damping fluid, it will press harder against the piston rod and/or separation piston, and for that reason it comprises, for instance, one or more flexible lips. In another variation, the separation piston comprises a flow channel extending between the chamber filled with compensation medium and the sealing part.

In order to confine the inward and outward sliding movement of the outer tube in relation to the inner tube, damping means are preferably provided between the separation piston and the outer tube, or else between the separation piston and the damping piston. These damping means can comprise a hydraulic stop and/or spring means.

Further preferred embodiments are recorded in the sub-claims.

The invention also relates to a motorcycle in correspondence with claim 22.

The invention will be further detailed below, based on the enclosed drawing, in which:
- figure 1 is an exploded view in perspective of a preferred embodiment in accordance with the invention during a compression stroke;
- figure 2 is a view in correspondence with figure 1 during a rebound stroke; and

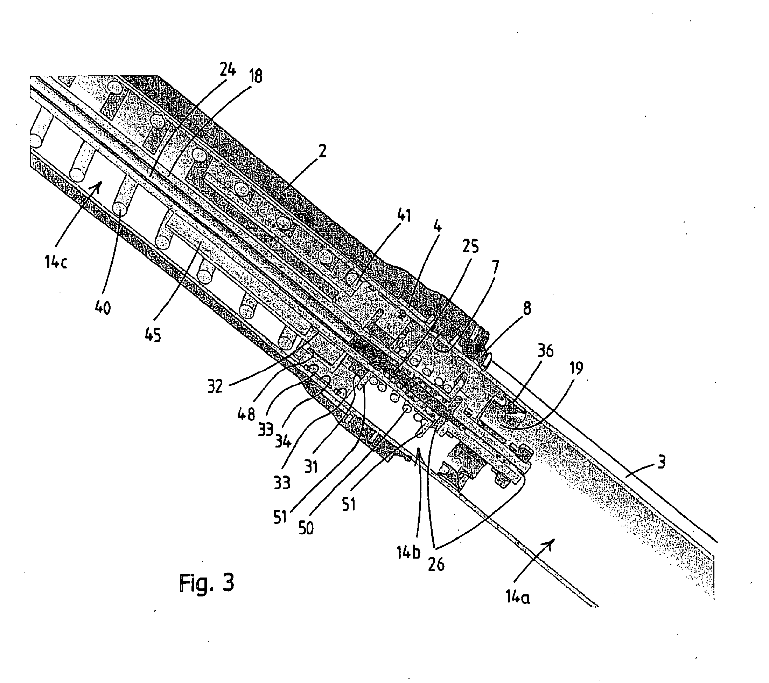

- figure 3 is a partial view of figure 1 at a maximum outward sliding movement.

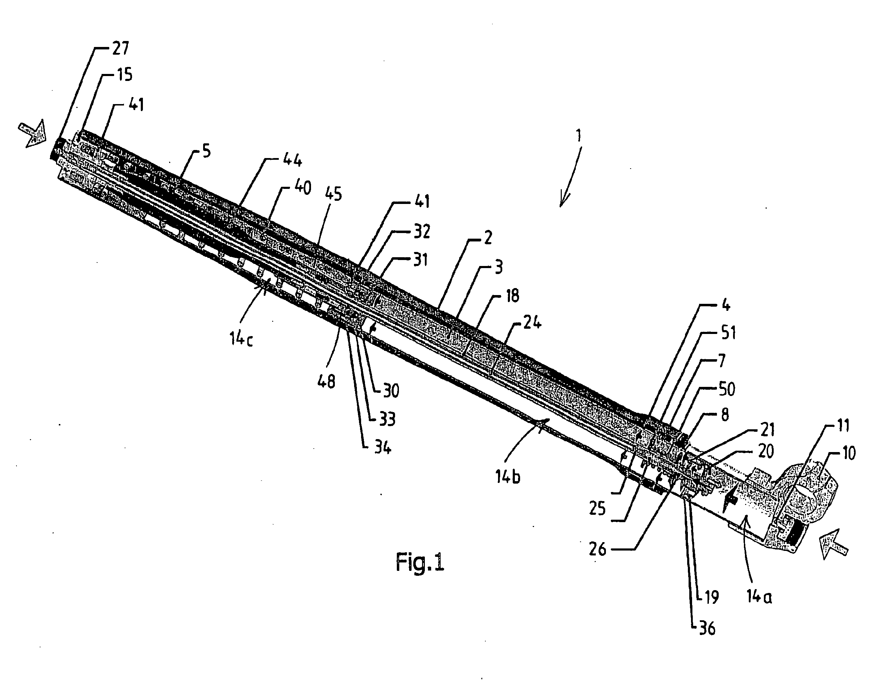

In figure 1 the wheel suspension as a whole is referred to by reference number 1. The suspension 1 comprises an outer tube 2 and an inner tube 3 that telescopically operate within each other. Between the tubes 2, 3 bearing bushes 4, 5 are provided that guarantee a good guidance. Furthermore, near the free end of the outer tube 2, a seal 7 and a dirt stripper 8 are provided. The end of inner tube 3, during use the bottom part of the suspension 1, is provided with an axle opening 10 that can be used to attach the suspension 1 to a wheel axle (not shown). A filling opening 11 is provided in order to (re-)fill a part 14a, 14b of a cylinder chamber 14 within the inner tube 3 with damping fluid. The end of outer tube 2, during use the top part of the suspension 1, is provided with a (screw) cap 15. A piston rod 18 is attached to the screw cap 15 and extends into the cylinder chamber 14. At the free end of the piston rod 18 a damping piston 19 is attached. The damping piston 19 is provided with a rebound damping 20 and a compression damping 21. The dampings 20, 21 comprise valves, in particular packets of shims, which will open at a particular pressure load during a movement of the damping piston 19 through the parts 14a, 14b of the damping fluid filled cylinder chamber 14. When opening, the valves release flow channels that extend from one end of the damping piston 19 to the other. This allows the damping fluid to flow from one side of the damping piston 19 to the other, as a result of which damping will take place.

The piston rod 18 is made as a spindle within which an adjusting tube 24 extends. At its free end the adjusting tube 24 is provided with a spring-loaded needle adjustment 25 which, to a larger or lesser extent, releases a by-pass channel 26 in the damping piston 19. The adjusting tube 24 is provided with a control button 27 that can be used to set the needle position as required.

A separation piston 30 is provided which can slide up and down the piston rod 18. One side of the separation piston 30, the bottom side during use, lies against the damping fluid filled part 14b of the cylinder chamber 14. With its other end, the top side during use, the separation piston 30 confines a compensation medium filled part 14c of the cylinder chamber 14.

The separation piston 30 comprises a sealing element 31 contained in a groove in the inside circumferential wall, as well as a bearing bush 32 contained in a groove in the inside circumferential wall. In grooves in the outside circumferential wall, two sealing rings 33 and a piston spring 34 are included which together provide guidance and sealing of the separation piston 30. In the same way, the damping piston 19 is provided with a piston spring 36 contained in a groove in the outside circumferential wall. In accordance with the invention, the axially slideable separation piston 30 as well as the damping piston 19 operate onto the same cylindrical inside circumferential wall parts of the inner tube 3.

Between the cap 15 and the separation piston 30 a metal helically coiled main spring 40 is provided, which extends through the compensation medium filled part 14c of the cylinder chamber 14, where it pushes the separation piston 30 against the damping fluid filled part 14b of the cylinder chamber 14, under pre-tension. Here, filling pieces 41 between the main spring 40 and the cap 15 or else the separation piston 30 will provide the required initial pre-tension.

To the cap 15, a piston body 44 is connected, which extends around the piston rod 18. The separation piston 30 comprises a cylinder part 45 that extends around the piston rod 18, while a ring-shaped gap that is predominantly complementary to the piston body 44 is kept free. Together, the piston body 44 and the cylinder part 45 constitute a hydraulic stop for confining an inward sliding movement of the outer tube 2 in relation to the inner tube 3. Advantageously, the cylinder part 45 with its outside circumferential wall also constitutes a centering part for the main spring 40 within the compensation medium filled part 14c of the cylinder chamber 14.

The separation piston 30 is provided with a flow channel 48 extending between the compensation medium filled part 14c of the cylinder chamber 14 on one side, and the sealing element 31 and the bearing bush 32 on the other side. Through the bearing bush 32, the flow channel 48 is also connected to the cylinder part 45. In this way, a good lubrication of the bearing bush 32 over the piston rod, an additional sealing pressure of a flexible lip of the sealing element 31 against the piston rod 18, and a proper damping function of the hydraulic stop are advantageously provided. The other side of the sealing element is also provided with such a flexible lip which under influence of the damping fluid's pressure will provide a very reliable sealing.

Between the damping piston 19 and the separation piston 30, damping means are also provided comprising a stop compression spring 50. The stop compression spring 50 is guided over the piston rod 18 by means of guiding bushes 51. The stop compression spring 50 confines an outward sliding movement of the outer tube 2 in relation to the inner tube 3.

While compressing (compression stroke) the suspension 1 (fig. 1), the damping piston 19 is moving downward in the cylinder chamber 14, and damping fluid will flow through the compression damping 21 and the by-pass channel 26 from one end 14a to the other end 14b of the damping piston 19. The separation piston 30 is pushed upwards against the main spring 40, over a distance that corresponds to the extra volume of piston rod 18 that has entered the damping fluid filled part 14b of the cylinder chamber 14. The pressure in the compensation medium filled part 14c will increase, as a result of which the compensation medium is compressed. If required, the hydraulic stop will be activated at the end of the compression stroke, as a result of which compensation medium will be pressed out of the cylinder part through the flow channel 48 and through a small gap between the cylinder part 45 and the piston body 44.

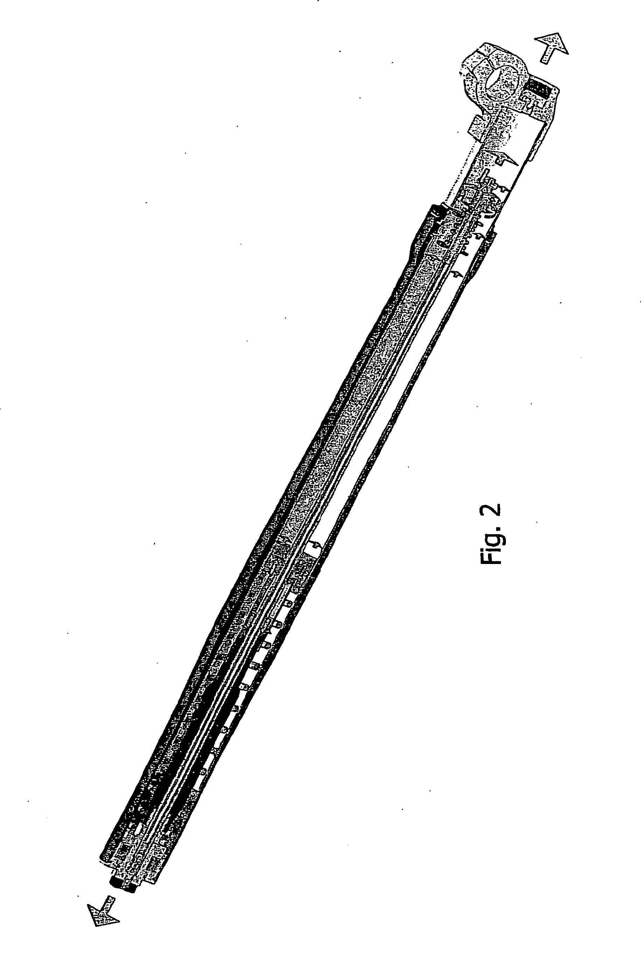

While rebounding (rebound stroke) the suspension 1 (fig. 2), the damping piston is moving upward in the cylinder chamber 14, and damping fluid will flow through the rebound damping 21 and the by-pass channel 26 from side 14b to side 14a of the damping piston 19. The separation piston 30 is pushed downward by the main spring 40, over a distance corresponding with the reduced volume of piston rod 18, that is removed from the damping fluid filled part 14b of the cylinder chamber 14. The pressure in the compensation medium filled part 14c will decrease, as a result of which the compensation medium can extend again. The hydraulic stop will quit working at the start of the incoming stroke, because compensation medium is flowing back into the cylinder part 45, through the flow channel 48 and through the small gap between the cylinder part 45 and the piston body 44. At the end of the rebound stroke, if required, the stop compression spring 50 will lie against the separation piston 30 as well as the damping piston 19 and provide damping.

In addition to the embodiment shown, many variations are possible. For instance, many parts can be made in different shapes and be made of different materials. Also, the wheel suspension can be applied on various types of vehicles, such as cars, (snow) scooters, and similar vehicles. However, the wheel suspension in accordance with the invention is proven to be particularly suitable as front wheel suspension for motorcycles, because of its weight-saving characteristics and the improved driving characteristics.

Thus, the invention offers a wheel suspension with a multifunctional separation piston which fully separates the damping fluid from the compensation medium, which constitutes a hydraulic stop, a piston rod guidance and a spring cup, and which, when the main spring is compressed during an incoming stroke, provides additional compression of the main spring during this stroke.

## Claims

1. Wheel suspension (1), comprising:
- inner and outer tubes (3,2) that can slide in and out of each other telescopically, and which together confine a cylinder chamber (14);
- a piston rod (18) extending into the cylinder chamber (14) and which is permanently fixed to the outer tube (2), and where a damping piston (19) is attached to its free end which operates in a chamber (14) filled with damping fluid;
- a separation piston (30) which can be moved up and down in longitudinal direction in relation to the piston rod (18) and which at one end confines a chamber (14) filled with compensation medium; and
- a main spring (40), which at one end applies pressure to the outer tube (2) and at the other end applies pressure to the separation piston (30);
**characterized in that**,
the damping piston (19) and separation piston (30) are operating in the same cylinder chamber (14) mentioned and that both, slideable in axial direction, operate on a same cylindrical inside circumferential wall part of the inner tube (3),
wherein the separation piston (30) at its other side is lying against the chamber (14) filled with damping fluid.

2. Wheel suspension in accordance with claim 1, wherein the separation piston (30) comprises a guiding part (32) that operates onto the piston rod (18) and guides it.

3. Wheel suspension in accordance with claim 2, wherein the rod guiding part (32) comprises a friction reducing bearing element:

4. Wheel suspension in accordance with claim 3 or 4, wherein the separation piston (30) comprises a flow channel (48) extending between the chamber (14c) filled with compensation medium and the rod guiding part (32).

5. Wheel suspension in accordance with one of the previous claims, wherein the separation piston (30) comprises a sealing part (31) lying against the piston rod (18) in order to seal it.

6. Wheel suspension in accordance with claim 5, wherein the rod sealing part (31) comprises a ring-shaped sealing element.

7. Wheel suspension in accordance with claim 5 or 6, wherein the separation piston (30) comprises a flow channel (48) extending between the chamber (14c) filled with compensation fluid and the rod sealing part (31).

8. Wheel suspension in accordance with one of the previous claims, wherein damping means (44,45) are provided between the separation piston (30) and the outer tube (2) in order to confine an inward sliding movement of the outer tube (2) in relation to the inner tube (3).

9. Wheel suspension in accordance with claim 8, wherein the damping means (44,45) comprise a hydraulic stop, which hydraulic stop comprises a piston and cylinder part (44,45) that can operate onto each other, where one is provided at the separation piston (30) and the other is provided at the outer tube (2).

10. Wheel suspension in accordance with claim 9, wherein the separation piston (30) comprises the cylinder part (45) of the hydraulic stop.

11. Wheel suspension in accordance with claim 10, wherein the separation piston (30) comprises a flow channel (48) extending between the chamber (14c) filled with compensation medium and the cylinder part (45) of the hydraulic stop.

12. Wheel suspension in accordance with one of the previous claims, wherein the main spring (40) comprises a spring element extending within the cylinder chamber (14) in axial direction into the chamber (14c) filled with compensation medium, and which applies pressure to the outer tube (2) with one end and applies pressure to the separation piston (30) with its other end.

13. Wheel suspension in accordance with claim 12, wherein the separation piston (30) comprises a centring part for the spring element (40).

14. Wheel suspension in accordance with claim 13 and one of the claims 10-11, wherein the cylinder part (45) of the hydraulic stop constitutes the centering part for the spring element (40).

15. Wheel suspension in accordance with one of the previous claims, wherein the separation piston (30) comprises at least one sealing element (33) lying against the cylindrical inside circumferential wall part of the inner tube (3) in order to seal it.

16. Wheel suspension in accordance with one of the previous claims, wherein the separation piston (30) comprises an outside circumferential groove taking up a piston spring (34).

17. Wheel suspension in accordance with one of the previous claims, wherein the compensation fluid comprises a lubricant, in particular lubricant oil.

18. Wheel suspension in accordance with claim 17, wherein the lubricant has a higher viscosity than the damping fluid.

19. Wheel suspension in accordance with one of the previous claims, wherein the damping means (50) are provided between the damping piston (19) and the separation piston (30) in order to confine an outward sliding movement of the outer tube (2) in relation to the inner tube (3).

20. Wheel suspension in accordance with claim 19, wherein the damping means (50) comprise a stop compression spring (50).

21. Wheel suspension in accordance with one of the previous claims, wherein the part of the cylinder chamber (14c) filled with compensation medium is sealed from the ambient air.

22. Motorcycle provided with a wheel suspension in accordance with one of the previous claims.

## Patentansprüche

1. Radaufhängung (1), die umfasst:
- ein inneres und ein äußeres Rohr (3, 2), die teleskopisch ineinander und auseinander gleiten können und die zusammen eine Zylinderkammer (14) begrenzen;
- eine Kolbenstange (18), die sich in die Zylinderkammer (14) erstreckt und die dauerhaft am äußeren Rohr (2) befestigt ist und an der ein Dämpfungskolben (19) an ihrem freien Ende befestigt ist, der in einer mit Dämpfungsfluid gefüllten Kammer (14) arbeitet;
- einen Trennkolben (30), der in einer Längsrichtung in Bezug auf die Kolbenstange (18) auf und ab bewegt werden kann und der an einem Ende eine mit Kompensationsmedium gefüllte Kammer (14) begrenzt; und
- eine Hauptfeder (40), die an einem Ende einen Druck auf das äußere Rohr (2) ausübt und am anderen Ende einen Druck auf den Trennkolben (30) ausübt;
**dadurch gekennzeichnet, dass**
der Dämpfungskolben (19) und der Trennkolben (30) in derselben erwähnten Zylinderkammer (14) arbeiten und dass beide, die in axialer Richtung verschiebbar sind, an einem gleichen zylindrischen Innenumfangswandteil des inneren Rohrs (3) arbeiten,
wobei der Trennkolben (30) auf seiner anderen Seite an der mit Dämpfungsfluid gefüllten Kammer (14) anliegt.

2. Radaufhängung nach Anspruch 1, wobei der Trennkolben (30) einen Führungsteil (32) umfasst, der auf die Kolbenstange (18) wirkt und sie führt.

3. Radaufhängung nach Anspruch 2, wobei der Stangenführungsteil (32) ein die Reibung verringerndes Lagerelement umfasst.

4. Radaufhängung nach Anspruch 3 oder 4, wobei der Trennkolben (30) einen Strömungskanal (48) umfasst, der sich zwischen der mit Kompensationsmedium gefüllten Kammer (14c) und dem Stangenführungsteil (32) erstreckt.

5. Radaufhängung nach einem der vorhergehenden Ansprüche, wobei der Trennkolben (30) einen Dichtungsteil (31) umfasst, der an der Kolbenstange (18) anliegt, um sie abzudichten.

6. Radaufhängung nach Anspruch 5, wobei der Stangendichtungsteil (38) ein ringförmiges Dichtungselement umfasst.

7. Radaufhängung nach Anspruch 5 oder 6, wobei der Trennkolben (30) einen Strömungskanal (48) umfasst, der sich zwischen der mit Kompensationsfluid gefüllten Kammer (14c) und dem Stangendichtungsteil (31) erstreckt.

8. Radaufhängung nach einem der vorhergehenden Ansprüche, wobei Dämpfungsmittel (44, 45) zwischen dem Trennkolben (30) und dem äußeren Rohr (2) vorgesehen sind, um eine Einwärtsgleitbewegung des äußeren Rohrs (2) in Bezug auf das innere Rohr (3) zu begrenzen.

9. Radaufhängung nach Anspruch 8, wobei die Dämpfungsmittel (44, 45) einen hydraulischen Anschlag umfassen, wobei der hydraulische Anschlag einen Kolben und einen Zylinderteil (44, 45) umfasst, die aufeinander einwirken können, wobei einer am Trennkolben (30) vorgesehen ist und der andere am äußeren Rohr (2) vorgesehen ist.

10. Radaufhängung nach Anspruch 9, wobei der Trennkolben (30) den Zylinderteil (45) des hydraulischen Anschlags umfasst.

11. Radaufhängung nach Anspruch 10, wobei der Trennkolben (30) einen Strömungskanal (48) umfasst, der sich zwischen der mit Kompensationsmedium gefüllten Kammer (14c) und dem Zylinderteil (45) des hydraulischen Anschlags erstreckt.

12. Radaufhängung nach einem der vorhergehenden Ansprüche, wobei die Hauptfeder (40) ein Federelement umfasst, das sich innerhalb der Zylinderkammer (14) in axialer Richtung in die mit Kompensationsmedium gefüllte Kammer (14c) erstreckt und die mit einem Ende einen Druck auf das äußere Rohr (2) ausübt und mit ihrem anderen Ende einen Druck auf den Trennkolben (30) ausübt.

13. Radaufhängung nach Anspruch 12, wobei der Trennkolben (30) einen Zentrierteil für das Federelement (40) umfasst.

14. Radaufhängung nach Anspruch 13 und einem der Ansprüche 10-11,
wobei der Zylinderteil (45) des hydraulischen Anschlags den Zentrierteil für das Federelement (40) bildet.

15. Radaufhängung nach einem der vorhergehenden Ansprüche, wobei der Trennkolben (30) mindestens ein Dichtungselement (33) umfasst, das am zylindrischen Innenumfangswandteil des inneren Rohrs (3) anliegt, um es abzudichten.

16. Radaufhängung nach einem der vorhergehenden Ansprüche, wobei der Trennkolben (30) eine äußere Umfangsnut umfasst, die eine Kolbenfeder (34) aufnimmt.

17. Radaufhängung nach einem der vorhergehenden Ansprüche, wobei das Kompensationsfluid ein Schmiermittel, insbesondere Schmieröl, umfasst.

18. Radaufhängung nach Anspruch 17, wobei das Schmiermittel eine höhere Viskosität aufweist als das Dämpfungsfluid.

19. Radaufhängung nach einem der vorhergehenden Ansprüche, wobei die Dämpfungsmittel (50) zwischen dem Dämpfungskolben (19) und dem Trennkolben (30) vorgesehen sind, um eine Auswärtsgleitbewegung des äußeren Rohrs (2) in Bezug auf das innere Rohr (3) zu begrenzen.

20. Radaufhängung nach Anspruch 19, wobei die Dämpfungsmittel (50) eine Anschlagdruckfeder (50) umfassen.

21. Radaufhängung nach einem der vorhergehenden Ansprüche, wobei der Teil der Zylinderkammer (14c), der mit Kompensationsmedium gefüllt ist, gegenüber der Umgebungsluft abgedichtet ist.

22. Motorrad, das mit einer Radaufhängung nach einem der vorhergehenden Ansprüche versehen ist.

## Revendications

1. Suspension pour roue (1) comprenant :
- des tubes interne et externe (3, 2) pouvant coulisser à l'intérieur et à l'extérieur l'un par rapport à l'autre de manière télescopique, et qui délimitent une chambre de cylindre (14) ;
- une tige de piston (18) s'étendant à l'intérieur de la chambre de cylindre (14) et qui est fixée de manière permanente au tube externe (2), et où un piston d'amortissement (19) est attaché à son extrémité libre qui est actionnée dans une chambre remplie d'un fluide amortisseur ;
- un piston de séparation (30) qui peut se déplacer vers le haut et vers le bas dans une direction longitudinale par rapport à la tige de piston (18) et qui à une extrémité délimite une chambre (14) remplie d'un milieu de compensation ; et
- un ressort principal (40) qui à une extrémité applique une pression au tube externe (2) et à l'autre extrémité applique une pression au piston de séparation (30) ;
**caractérisé en ce que**
- le piston d'amortissement (19) et le piston de séparation (30) sont actionnés dans la même chambre de cylindre (14) mentionnée et **en ce que** les deux pistons, apte à coulisser dans une direction axiale, sont actionnés sur la même partie cylindrique à l'intérieur de la paroi circonférentielle du tube interne (3) ;
dans laquelle le piston de séparation (30) à son autre côté est en appui contre la chambre (14) remplie de fluide amortisseur.

2. Suspension pour roue selon la revendication 1, dans laquelle le piston de séparation (30) comprend une partie de guidage (32) qui est actionnée sur la tige de piston (18) et le guide.

3. Suspension pour roue selon la revendication 2, dans laquelle la partie de guidage de la tige (32) comprend un élément de palier réducteur de frottement.

4. Suspension pour roue selon la revendication 2 ou 3, dans laquelle le piston de séparation (30) comprend un canal d'écoulement (48) s'étendant entre la chambre (146) remplie d'un milieu de compensation et la partie de guidage de la tige.

5. Suspension pour roue selon l'une des revendications précédentes, dans laquelle le piston de séparation (30) comprend une partie d'étanchéité en appui contre la tige de piston (18) afin de réaliser son étanchéité.

6. Suspension pour roue selon la revendication 5, dans laquelle la partie d'étanchéité de la tige (31) comprend un élément d'étanchéité en forme d'anneau.

7. Suspension pour roue selon la revendication 5 ou 6, dans laquelle le piston de séparation comprend un canal d'écoulement (48) s'étendant entre la chambre (142) remplie avec le fluide de compensation et la partie d'étanchéité de la tige (31).

8. Suspension pour roue selon l'une des revendications précédentes, dans laquelle les moyens d'amortissement (44, 45) sont formés entre le piston de séparation (30) et le tube externe (2) afin de définir un mouvement à coulissement vers l'intérieur du tube externe (2) par rapport au tube interne (3).

9. Suspension pour roue selon la revendication 8, dans laquelle les moyens d'amortissement (44, 45) comprennent un arrêt hydraulique, lequel arrêt hydraulique comprend un piston et une partie de cylindre (44, 45) qui peuvent être actionnés l'un sur l'autre, où l'un est formé au niveau du piston de séparation (30) et l'autre est formé au niveau du tube externe (2).

10. Suspension pour roue selon la revendication 9, dans laquelle le piston de séparation (30) comprend la partie de cylindre (45) de l'arrêt hydraulique.

11. Suspension pour roue selon la revendication 10, dans laquelle le piston de séparation (30) comprend un canal d'écoulement (40) s'étendant entre la chambre (142) remplie du fluide de compensation et la partie de cylindre de l'arrêt hydraulique.

12. Suspension pour roue selon l'une des revendications précédentes, dans laquelle le ressort principal (42) comprend un élément de ressort s'étendant à l'intérieur de la chambre de cylindre (14) en direction axiale à l'intérieur de la chambre (142) remplie du milieu de compensation, et qui applique une pression au tube externe (2) avec une extrémité et applique une pression au piston de séparation (30) avec l'autre extrémité.

13. Suspension pour roue selon la revendication 12, dans laquelle le piston de séparation (30) comprend une partie de centrage pour l'élément de ressort (40).

14. Suspension pour roue selon la revendication 13 et l'une des revendications 10-11, dans laquelle la partie de cylindre (45) de l'arrêt hydraulique constitue la partie de centrage de l'élément de ressort (40).

15. Suspension pour roue selon l'une des revendications précédentes, dans laquelle le piston de séparation (30) comprend au moins un élément d'étanchéité (33) en appui contre la partie cylindrique à l'intérieur de la paroi circonférentielle du tube interne (3) afin de réaliser son étanchéité.

16. Suspension pour roue selon l'une des revendications précédentes, dans laquelle le piston de séparation (30) comprend une gorge circonférentielle externe d'enroulage du piston de ressort.

17. Suspension pour roue selon l'une des revendications précédentes, dans laquelle le fluide de compensation comprend un lubrifiant, en particulier de l'huile de lubrification.

18. Suspension pour roue selon la revendication 17, dans laquelle le lubrifiant a une viscosité supérieure que le fluide d'amortissement.

19. Suspension pour roue selon l'une des revendications précédentes, dans laquelle les moyens d'amortissement (50) sont formés entre le piston d'amortissement (19) et le piston de séparation (30) pour définir un mouvement à coulissement externe du tube externe par rapport au tube interne (3).

20. Suspension pour roue selon la revendication 19, dans laquelle les moyens d'amortissement comprennent un ressort de pression de butée.

21. Suspension pour roue selon l'une des revendications précédentes, dans laquelle la partie de la chambre de cylindre (142) remplie avec un milieu de compensation est étanche à l'air ambiant.

22. Motocyclette formée avec une roue de suspension selon l'une des revendications précédentes.
